(19) Europäisches Patentamt
European Patent Office
Office européen des brevets

(11) Publication number: **0 097 411**
**B1**

# (12) EUROPEAN PATENT SPECIFICATION

(45) Date of publication of patent specification: **02.07.86**

(51) Int. Cl.$^4$: **C 08 G 73/10,** C 08 J 9/02, B 29 C 67/22, C 08 L 79/08

(21) Application number: **83301629.8**

(22) Date of filing: **23.03.83**

## (54) Foamed polyimide and polyamide-imide, and production thereof.

(30) Priority: **21.06.82 US 390778**

(43) Date of publication of application:
**04.01.84 Bulletin 84/01**

(45) Publication of the grant of the patent:
**02.07.86 Bulletin 86/27**

(84) Designated Contracting States:
**AT BE CH DE FR GB IT LI LU NL SE**

(56) References cited:
**EP-A-0 048 079**
**US-A-4 161 477**

(73) Proprietor: **Gagliani, John**
**6280 Lance Place**
**San Diego California 92120 (US)**
(73) Proprietor: **Long, John V.**
**1756 E. Lexington Avenue**
**El Cajon California 92121 (US)**

(72) Inventor: **Gagliani, John**
**6280 Lance Place**
**San Diego California 92120 (US)**
Inventor: **Long, John V.**
**1756 E. Lexington Avenue**
**El Cajon California 92121 (US)**

(74) Representative: **Austin, Hedley William et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

**Description**

The present invention is concerned with foam precursors and, more particularly, with a method of making precursors of resilient, flame resistant polyimide and polyimide-amide foams.

U.S. Patents 4161477, 4183838, and 4183839 disclose certain polyimide compositions which are flame resistant and useful as coatings and adhesives. The compositions described in these patents are made by first preparing a suitable bisimide by reacting an aromatic tetracarboxylic acid dianhydride with a lactam or aminoacid. The ratio of lactam or aminoacid to dianhydride is preferably in the range of 2.3:1 to 2.7:1 and the imidisation reaction is preferably conducted at a temperature of from 170° to 200°C for a period of 20 to 60 minutes.

The resulting N,N'-disubstituted bisimide dicarboxylic acid is then dissolved in an inert solvent and a suitable diamine is added to produce a viscous liquid containing an intimate, unpolymerised mixture of the bisimide and the diamine which can be converted to a high molecular weight polymer by the application of heat.

The solution is coated on to a surface and polymerised by heating at a temperature of from 177° to 316°C for a period of from 30 minutes to 5 hours. The following is an example of the exchange reaction which takes place:

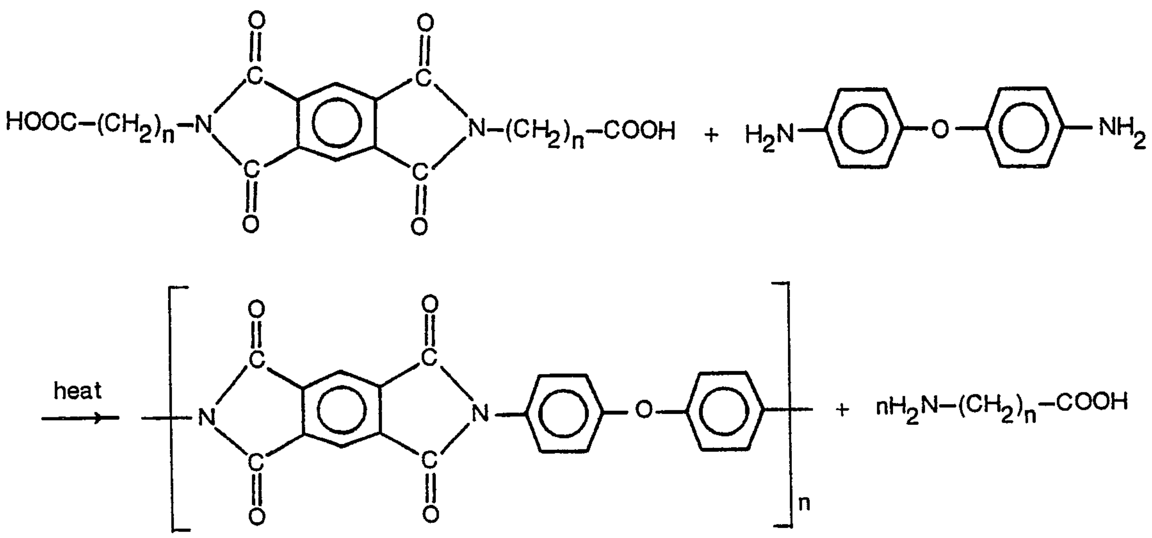


where n is an integer.

The resulting coating is tough, highly adherent to various surfaces and has very few pinholes or bubbles. It has excellent peel strength and is resistant to high temperatures, peeling and abrasion.

The coating materials of the prior art, however, are not suitable for use in applications requiring a cellular or foam material, since conventional agitation foaming and the addition of known blowing agents add to the complexity and costs of the process and are not entirely effective at the relatively high polymerisation temperature which is necessary.

We have now found that by suitably varying the reaction conditions and certain ingredients, within specified limits, starting materials similar to those described in the patents cited above can be used to produce resilient, flame resistant foams having a modified polyimide cellular structure. The term "modified polyimide" is used herein to refer to a mixture of polyimide and polyimide-amide varying from almost entirely polyimide to almost entirely polyimide-amide.

The basic steps in producing the resilient foam of the present invention consist of reacting an aromatic dianhydride with a lactam in a mole ratio of lactam to dianhydride in the range 0.05:1 to 1.5:1 to produce an N-substituted imide (excessive amounts of the N,N-disubstituted bisimide are produced above a ratio of 1.5:1, which are not suitable for the foaming reaction), dissolving the product in an alcohol and heating the solution to esterify the imide, adding at least one diamine and any desired additives, drying the mixture to a film or powder, and finally heating the dry material to a temperature sufficient to cause the dry material to melt and spontaneously foam. The heating causes the material to simultaneously undergo both a condensation reaction and an exchange reaction. The condensation reaction produces water and alcohol vapours which cause the molten mass to expand. As the reactions proceed, the molten mass forms a cellular structure which becomes self-supporting and finally cures to an imide and/or imide-amide polymer depending on the heating conditions used.

According to the present invention, therefore, there is provided a method of making a dry foam precursor which can be converted to a modified polyimide foam by heating, which method comprises the steps of:

reacting 1 mole of at least one aromatic dianhydride with 0.05 to 1.5 moles of a lactam of the formula

$$H_2C-(CH_2)_x-NHC=O$$

where x is 2, 3, or 4, so as to produce an N-substituted aliphatic imide;

dissolving and esterifying said imide in an esterifying solvent;

adding thereto at least one diamine and drying the resulting solution.

Suitable aromatic dianhydrides for use in the method of the invention include those described in the patents cited above. Due to their ready availability at reasonable prices and the excellent foams which they produce, preferred dianhydrides are pyromellitic dianhydride and 3,3',4,4' benzophenone tetracarboxylic acid dianhydride (BTDA), and mixtures thereof.

Suitable lactams for use in the method of the invention have the formula:

$$CH_2-(CH_2)_x-NHCO$$

where x is an integer of from 2 to 4. Of these, the best results have been obtained with caprolactam (x = 4) because larger ring structures tend to open more readily with heat and react with the aromatic dianhydride.

While any suitable reaction conditions can be used, the best results have been obtained when the dianhydride is added to the lactam and the mixture is heated at a temperature of from 150° to 200°C until imidisation is complete, which takes from 5 to 90 minutes. Optimum results have been obtained at 180°C for 30 minutes.

It has been found that excellent foaming materials are produced when the mole ratio of lactam to dianhydride is in the range of 0.05:1 to 1.5:1. Above this range, the material forms a coating which does not foam, while below this range excessively rigid material is produced. Within this range optimum results occur with a mole ratio of lactam to dianhydride of about 1.0 to 1.0.

The N-substituted imides produced by the above reaction have the formula:

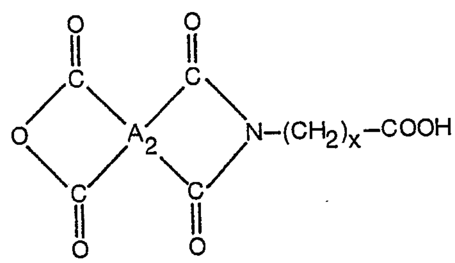

where x is an integer of from 2 to 4 and $A_2$ is preferably:

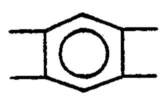

or

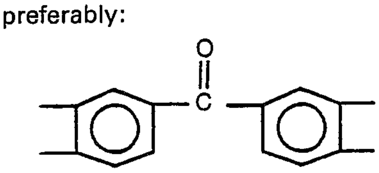

or mixtures thereof.

The imide thus produced is then esterified by dissolving it in a suitable alcohol at a suitable temperature. Preferred alcohols are aliphatic alcohols having up to 7 carbon atoms and aromatic alcohols, which may have halogen or amino substituents, and mixtures of two or more thereof. The best results have been obtained with methanol. The esterification reaction takes places as follows:

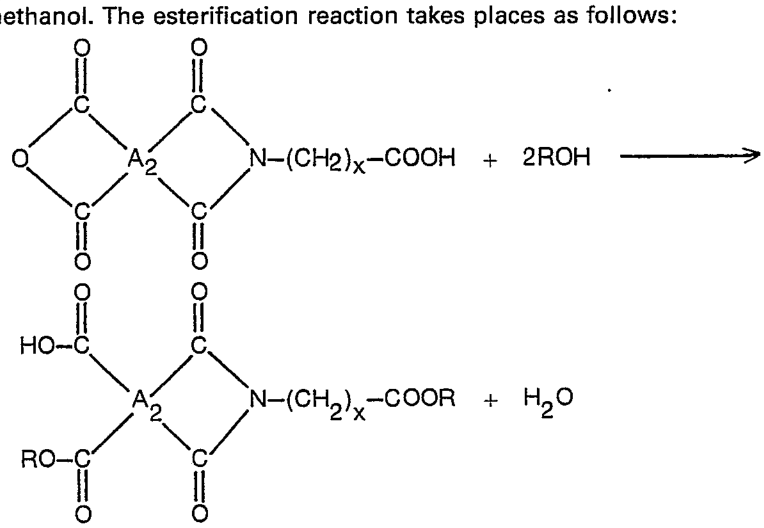

where x and $A_2$ are as before and R is an aliphatic or aromatic radical which may have halogen or amino substituents. The esterification may take place under any suitable conditions. Typically, a mole ratio of imide to esterifying agent of from 1:8 to 1:15 is preferred in order to ensure rapid esterification at reflux temperature. The solution is refluxed at a temperature of 70° to 80°C until clear, which usually takes from 60 to 90 minutes. Once esterification is complete, the selected diamine or diamines are added to the solution. Preferably, an approximately stoichiometric quantity of diamine to dianhydride is used.

Suitable diamines for use in the method of the invention include, for example, *m*-phenylenediamine, *p*-phenylenediamine, 4,4'-diaminodiphenyl ether, 4,4'-diaminodiphenyl sulfone, 3,3'-diaminodiphenyl sulfone, 4,4'-diaminodiphenyl sulfide, 4,4'-diaminodiphenyl methane, 3,3' diaminodiphenylmethane and mixtures of two or more thereof. Of these, the best results are obtained with 4,4'-diaminodiphenylmethane.

If desired, aliphatic diamines may be used in combination with these aromatic diamines. Suitable aliphatic diamines for use in the method of the invention include, for example, 1,3-diaminopropane, 1,4-diaminobutane, 1,6-diaminohexane, 1,8-diaminooctane, 1,12-diaminododecane, and mixtures of two or more thereof.

Additives to improve various characteristics of the final foam can be added as desired. Any appropriate additives may be used, such as fillers, surfactants to improve the uniformity of the cellular structure, ultraviolet absorbers, or the like. Suitable surfactants for use in the method of the invention include, for example, Dow Corning Corp. 190 or 193 (a silicone surfactant), FC430 from Minnesota Mining & Manufacturing Co., Zonyl FSC from E. I. duPont de Nemours & Co., and L550 from Union Carbide Corp. While any suitable concentration may be used, from 0.01% to 2% by weight (based on the weight of the resin prior to drying) is preferred. Of these surfactants, the best results have been obtained with Zonyl FSC. Fillers and reinforcing additives can be added prior to drying the resin. Suitable fillers include, for example, Kevlar® aramid fibres, graphite fibres, glass fibres, carbon and graphite fibres, Teflon®-fluorocarbon powders and mixtures of two or more thereof.

Before drying, the mixture may be refluxed at 70° to 80°C for a period of 2 to 30 minutes.

The resin can be dried by any suitable means. Simply heating the resin in an oven at a temperature of from 60° to 95°C until dry is satisfactory; 60 to 240 minutes is usually required. Other conventional methods, such as spray drying, rotary drying, thin film evaporation, etc. can be used. The resulting free-flowing powder or flakes can be further ground or treated as required, and can be stored indefinitely at room temperature.

The final step in converting the powder into a foam is accomplished by heating the powder to a selected foaming temperature for a suitable period. The reaction which takes place is quite complex, since it is a combined condensation and exchange reaction. When the exchange reaction is forced to completion by higher temperatures and/or prolonged heating, preferably at a temperature of from 230° to 320°C for a period of 30 to 60 minutes (optimally, 260°C for 45 minutes) the polyamide structure is formed as shown in the following reaction scheme:

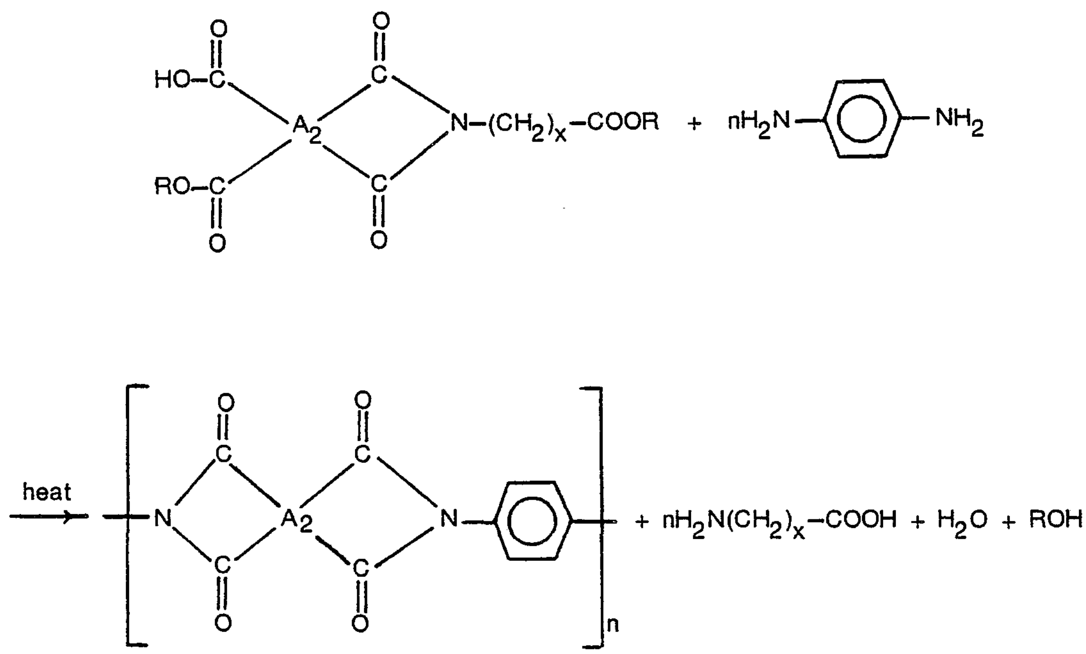


wherein x, n, and $A_2$ are as before.

If, however, the exchange reaction is stopped prior to completion, the products of the intermediate condensation reaction will still be present so that a variable (depending on reaction time, temperature and conditions) amount of a polymer having the following imide-amide structrue will be present:

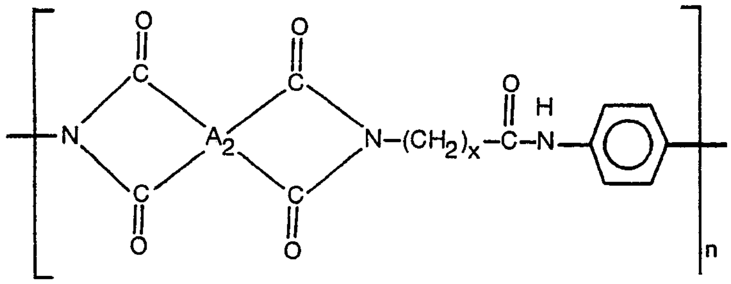

where x, n, and $A_2$ are as before. Typical heating conditions to produce a foam comprising both polyimide and polyimide-amide are a temperature of from 210° to 250°C for a period of 30 to 45 minutes.

As the powder is heated it first melts, then as the condensation reaction begins, water and alcohol are released and vaporised, causing the molten mass to expand. The resulting cellular structure becomes self-supporting and finally cures to an imide and/or imide-amide polymer, with the relative proportions of the two polymers depending on heating (time and temperature) conditions. The resulting foam is tough, resilient and does not emit significant smoke or toxic by-products when exposed to an open flame.

Where substantially entirely polyimide-amide foam is desired, heating should be carried out at a temperature of from 120° to 220°C for a period of from 10 to 40 minutes, with optimum results at 200°C for 30 minutes. As the temperature is increased above this range (and a somewhat longer heating period is used) the proportion of polyimide in the resultant foam is increased. The foam is more flame resistant, but less flexible, with a higher proportion of polyimide. Thus, by varying heating conditions, the flexibility and flame resistance of the foam can be tailored to meet specific requirements.

In order that the invention may be more fully understood, the following examples are given by way of illustration.

Example 1

120.8 g (0.375 mole) of 3,3′,4,4′-benzophenone tetracarboxylic acid dianhydride (BTDA) and 28.29 g (0.25 mole) of caprolactam were placed in a one-litre flask and heated to 175°C. After 30 minutes at this temperature, the mixture was cooled to 50°C and ethanol (100 g) was added. The solutioin was heated to reflux temperature (about 75°C) and refluxing continued until the solution appeared clear (after about 70 minutes). The solution was cooled to just below 70°C anmd 75 g (0.375 mole) of 4,4′-diaminodiphenylmethane was added. The mixture was refluxed at 75°C for 15 minutes, then cooled to room temperature and coated on to aluminium foil. The coating had a heavy, syrup-like consistency and a thickness of 0.5-1 mm (20-40 mils) was applied. The coating was dried for 3 hours at 65°C and the dry residue removed from the foil and placed in a pre-heated oven at 260°C. After 45 minutes of heating, the material was found to have expanded into a flexible, resilient foam sheet having an homogeneous cellular structure. When exposed to an open flame, the foam produced no visible smoke. This foam was found to consist primarily of polyimide.

Example 2

The procedure of Example 1 was repeated four times, but using various quantities of caprolactam. While Example 1 used 28.29 g (0.25 mole) of caprolactam to give a mole ratio of caprolactam to BDTA of 0.66:1, the four additional experiments used caprolactam quantities of: (a) 43.4 g (0.375 mole, 1:1 ratio), (b) 53 g (0.468 mole, 1.25:1 ratio), (c) 63.6 g (0.5625 mole, 1.5:1 ratio), and (d) 84.8 g (0.75 mole, 2:1 ratio). The foam produced in experiments (a) and (b) had excellent foam rise characteristics, while that produced in (c) had low foam rise and (d) did not foam at all. This demonstrates that ratios of lactam to dianhydride in the range of 0.05:1 to 1.5:1 are necessary for the production of good quality foams.

Example 3

The procedure of Example 1 was repeated, except that instead of ethanol, the following solvents were used: (a) isopropanol, (b) 2-aminoethanol, (c) benzene, (d) N,N-dimethylacetamide, and (e) acetone. Examples (c), (d), and (e) are not in accordance with the method of the present invention and are included for purposes of comparison. In those cases ((a) and (b)) where a reactive solvent was used to esterify the imide, an excellent foam was obtained. Where an inert solvent was used, as in (c), (d), and (e), foaming did not take place on heating.

Example 4

The procedure of Example 1 was followed and five samples of the dry powdered solid were prepared. The five dry powder samples were placed in pre-heated circulating air ovens at the following temperatures for the following time periods: (a) 125°C for 40 minutes, (b) 200°C for 30 minutes, (c) 220°C for 10 minutes,

(d) 235°C for 30 minutes, and (e) 310°C for 30 minutes. Each sample formed a foam of good resiliency and flame resistance. Samples (a) and (b) were found to be primarily polyimide-amide and to have outstanding flexibility but low flame resistance. Example (c) was found to be about 50/50 polyimide and polyimide-amide and to have intermediate properties of flexibility and flame resistance. Examples (d) and (e) were found to be primarily polyimide and to have less flexibility but outstanding flame resistance. In general, higher temperatures and longer heating periods produced a foam with a higher proportion of polyimide and greater stiffness. Higher temperatures were found to be more significant than longer heating periods in producing the high polyimide foams.

Example 5

The procedure of Example 1 was repeated, but instead of 4,4'-diaminodiphenylmethane, the following diamines were used: (a) *m*-pheylenediamine (0.375 mole), (b) 4,4'-diaminodiphenyl sulfone (0.375 mole), (c) 4,4'-diaminodiphenyl ether (0.375 mole), and (d) 4,4'-diaminodiphenyl ether (0.1875 mole) and 4,4'-diaminodiphenyl sulfide (0.1875 mole). In each case the resulting foam had a uniform cellular structure and excellent heat and flame resistance. The flexibility and resiliency of each foam varied somewhat according to the nature of the diamine(s) used.

Example 6

The procedure of Example 1 was repeated, but instead of caprolactam, the following lactams were used: (a) 2-pyrrolidone (0.25 mole), (b) 2-piperidone (0.25 mole), and (c) caprolactam (0.125 mole) and 2-piperidone (0.125 mole). The product in each case was an excellent, flame resistant foam, with slight differences in the physical properties of each foam according to the nature of the lactam(s) used.

Example 7

322 g (1.0 mole) of 3,3'-4,4'-benzophenone tetracarboxylic acid dianhydride and 226 g (2.0 mole) of caprolactam were added to a 5-litre flask and the mixture heated at 170°C for 30 minutes. The mixture was cooled to 70°C and methanol (800 g) then added. When the esterification product had fully dissolved, a further 644 g (2.0 mole) of 3,3'-4,4'-benzophenone tetracarboxylic acid dianhydride was added. The mixture was refluxed until clear and then cooled to 45°C. 297 g (1.5 mole) of 4,4'-diaminodiphenylmethane and 192 g (0.96 mole) of 4,4'-diaminodiphenyl ether were then added and the mixture stirred at 50°C until solution was complete. 64 g (0.54 mole) of 1,6-diaminohexane was dissolved in methanol (100 g) and the solution added to the mixture while maintaining the temperature of the mixture at below 55°C. The mixture was then heated to 65°C and held at this temperature for 10 minutes. 17 g of Dow Corning 193®, a silicone surfactant, was stirred into the mixture as it cooled to room temperature. The resulting resin was dried using a high speed atomiser spraying into a chamber pre-heated to a temperature of 75°C. The dried resin was collected and stored at room temperature. A layer of the powder was placed in a thermal oven (pre-heated to 200°C) for 60 minutes. The powder first melted, then expanded into a very flexible and resilient foam sheet with very uniform cell structure and having a compression set value at 90% compression of less than 20%. These properties are attributed to the use of both aliphatic and aromatic diamines in the preparation of the resin.

Example 8

The procedure of Example 7 was repeated, except that the final heating step was carried out in a microwave oven. The dry powder was placed in the oven and a powder of about 1.0 kW was applied. Rapid melting and expansion occurred, producing an excellent resilient foam after 6 minutes.

**Claims**

1. A method of making a dry foam precursor which can be converted to a modified polyimide foam by heating, which method comprises the steps of:

reacting 1 mole of at least one aromatic dianhydride with 0.05 to 1.5 moles of a lactam of the formula

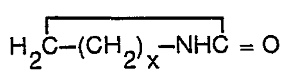

where x is 2, 3, or 4, so as to produce an N-substituted aliphatic imide,

dissolving and esterifying said imide in an esterifying solvent;

adding thereto at least one diamine and drying the resulting solution.

2. A method according to claim 1, in which the aromatic dianhydride is pyromellitic dianhydride and/or 3,3'-4,4'-benzophenone tetracarboxylic acid dianhydride.

3. A method according to claim 1 or 2, in wich the esterifying agent is methanol.

4. A method according to any of claims 1 to 3, in which the diamine comprises an aromatic diamine, optionally in admixture with a further diamine.

5. A method according to claim 4, in which the aromatic diamine is 4,4'-diaminodiphenylmethane.

6. A method according to any of claims 1 to 5, which further comprises adding fillers, reinforcing materials or 0.01 to 2% by weight of a surfactant to said solution before drying.

7. A method according to any of claims 1 to 5, in which the lactam is heated with the dianhydride for 5 to 90 minutes at 150° to 200°C, the mixture is cooled to 40° to 70°C, and the imide is then dissolved in the esterifying solvent and refluxed at 70° to 80°C for 60 to 90 minutes so as to esterify the imide.

8. A method according to claim 7, in which the diamine is 4,4'-diaminodiphenylmethane in substantially equimolar amount relative to said dianhydride, and the solution containing said diamine is refluxed at 70° to 80°C for 2 to 30 minutes before drying, said drying being at 60° to 70°C for 60 to 240 minutes.

9. A method according to any of claims 1 to 8, which further comprises forming the resulting dried material into free-flowing powder, or flakes.

10. A method of producing a modified polyimide foam, which comprises making a dry foam precursor according to the method of any of claims 1 to 9, and heating the dry foam precursor to a temperature in the range of 120° to 320°C for 10 to 60 minutes.

1. A method according to claim 10, in which the dry foam precursor is heated to a temperature in the range 230° to 320°C, preferably for 30 to 60 minutes, such that the resulting foam predominantly comprises polyimide.

12. A method according to claim 10, in which the dry foam precursor is heated to a temperature in the range 120° to 220°C, preferably for 10 to 40 minutes, such that the resulting foam predominantly comprises polyimide-amide.

13. A method according to claim 10, in which the dry foam precursor is heated to a temperature in the range 210° to 250°C, preferably for 30 to 45 minutes, such that the resulting foam comprises polyimide and polyimide-amide.

**Patentansprüche**

1. Verfahren zur Herstellung eines trockenen Schaumvorläufers, der durch Erhitzen in einen modifizierten Polyimidschaum umgewandelt werden kann, wobei das Vefahren die folgenden Stufen umfaßt:

Umsetzen von 1 Mol mindestens eines aromatischen Dianhydrids mit 0,05 bis 1,5 Molen eines Lactams der Formel

$$H_2C-(CH_2)_x-NHC=O$$

worin x, 2, 3 oder 4 bedeutet, um ein N-substituiertes, aliphatisches Imid zu bilden,

Lösen und Verestern des Imids in einem Veresterungslösungsmittel;

Zusetzen hierzu mindestens eines Diamins und Trocknen der resultierenden Lösung.

2. Verfahren nach Anspruch 1, wobei das aromatische Dianydrid Pyromellitsäuredihydrid und/oder 3,3',4,4'-Benzophenontetracarbonsäuredianhydrid ist.

3. Verfahren nach Anspruch 1 oder 2, wobie das Veresterungsmittel Methanol ist.

4. Verfahren nach mindestens einem der Ansprüche 1 bis 3, wobei das Diamin ein aromatisches Diamin, wahlweise in Mischung mit einem weiteren Diamin, umfaßt.

5. Verfahren nach Anspruch 4, wobei das aromatische Diamin 4,4'-Diaminodiphenylmethan ist.

6. Verfahren nach mindestens einem der Ansprüche 1 bis 5, unfassend weiterhin das Zusetzen von Füllstoffen, Verstärkungsmaterialien oder 0,01 bis 2 Gew.-% eines oberflächenaktiven Mittels zu der Lösung vor dem Trocknen.

7. Verfahren nach mindestens einem der Ansprüche 1 bis 5, wobei das Lactam mit dem Dianhydrid 5 bis 90 min bei 150 bis 200°C erhitzt, die Mischung auf 40 bis 70°C gekühlt und danach das Imid in dem Veresterungslösungsmittle gelöst und bei 70 bis 80°C über 60 bis 90 min unter Rückfluß gehalten wird, um das Imid zu verestern.

8. Verfahren nach Anspruch 7, wobei das Diamin 4,4'-Diaminodiphenylmethan in im wesentlichen äquimolarer Menge bezüglich dem Dianhydrid ist und wobei die das Dimain enthaltende Lösung vor dem Trocknen bei 70 bis 80°C über 2 bis 30 min unter Rückfluß gehalten wird, wobei das Trocknen bei 60 bis 70°C über 60 bis 240 min erfolgt.

9. Verfahren nach mindestens einem der Ansprüche 1 bis 8, umfassend weiterhin das Umformen des resultierenden, getrockneten Materials zu freifließendem Pulver oder Flocken.

10. Verfahren zer Herstellung eines modifizierten Polymidschaums, umfassend das Herstellen eines trockenen Schaumvorläufers gemäß dem Verfahren nach mindestens einem der Ansprüche 1 bis 9 und Erhitzen des trockenen Schaumvorläufers auf eine Temperatur im Bereich von 120 bis 320°C über 10 bis 60 min.

11. Verfahren nach Anspruch 10, wobei der trockene Schaumvorläufer auf eine Temperatur im Bereich von 230 bis 320°C, vorzugsweise über 30 bis 60 min erhitzt wird, so daß der resultierende Schaum vorwiegend Polyimid unfaßt.

12. Verfahren nach Anspruch 10, wobei der trockene Schaumvorläufer auf eine Temperatur im Bereich von 120 bis 220°C, vorzugsweise über 10 bis 40 min, erhitzt wird, so daß der resultierende Schaum vorwiegend polyimidamid umfaßt.

13. Verfahren nach Anspruch 10, wobei der trockene Schaumvorläufer auf eine Temperatur im Bereich von 210 bis 250°C, vorzugsweise über 30 bis 45 min, erhitzt wird, so daß der resultierende Schaum Polyimid und Polyimidamid umfaßt.

**Revendications**

1. Un procédé de préparation d'un précurseur sec de mousse que l'on peut transformer en une mousse de polyimide modifié par chauffage, lequel procédé comprend les stades de:

réaction de 1 mole d'au moins un dianhydride aromatique avec 0,05 à 1,5 mole d'un lactame de formule

$$H_2C-(CH_2)_x-NHC=O$$

dans laquelle x est 2, 3 ou 4 pour produire un imide aliphatique N-substitué

dissolution est estérification dudit imide un solvant d'estérification;

addition d'au moins une diamine et séchage de la solution obtenue.

2. Un procédé selon la revendication 1, dans lequel le dianhydride aromatique est le dianhydride pyromellitique et/ou le dianhydride de l'acide 3,3',4,4'-benzophénonetétracarboxylique.

3. Un procédé selon la revendication 1 ou 2, dans lequel l'agent d'estérification est le méthanol.

4. Un procédé selon l'une quelconque des revendications 1 à 3, dans lequel la diamine comprend un diamine aromatique éventuellement en mélange avec un autre diamine.

5. Un procédé selon la revendication 4, dans lequel la diamine aromatique est le 4,4'-diaminodiphenylméthane.

6. Un procédé selon l'une quelconque des revendications 1 à 5 qui comprend de plus l'addition de charges, de matières de renfort ou de 0,01 à 2% en poids d'un agent tensioactif à ladite solution avant le séchage.

7. Un procédé selon l'une quelconque des revendications 1 à 5, dans lequel le lactame est chauffé avec le dianhydride pendant 5 à 90 min entre 150 et 200°C, le mélange est refroidi entre 40° et 70°C et l'imide est ensuite dissous dans le solvant d'estérification et porté à reflux entre 70° et 80°C pendant 60 à 90 min de façon à estérifier l'imide.

8. Un procédé selon la revendication 7, dans lequel la diamine est le 4,4'-diaminodiphéylméthane en une quantité essentiellement équimoléculaire par rapport audit dianhydride et la solution contenant ladite diamine est portée à reflux entre 70° et 80°C pendant 2 à 30 min avant séchage, ledit séchage étant effectué entre 60° et 70°C pendant 60 à 240 min.

9. Un procédé selon l'une quelconque des revendications 1 à 8 qui comprend de plus la transformation de la matière séchée obtenue en une poudre fluide ou en paillettes.

10. Un procédé de production d'une mousse de polyimide modifié qui comprend la préparation d'un précurseur sec de mousse selon le procédé de l'une quelconque des revendications 1 à 9 et le chauffage du précurseur sec de mousse à un température dans la gamme de 120° à 320°C 10 à 60 min.

11. Un procédé selon la revendication 10, dans lequel le précurseur sec de mousse est chauffé à une température dans la gamme de 230° à 320°C, de préférence pendant 30 à 60 min, pour que la mousse obtenue soit constituée de façon prédominante de polyimide.

12. Un procédé selon la revendication 10, dans lequel le précurseur sec de mousse est chauffé à une température dans la gamme de 120° à 220°C, de préférence pendant 10 à 40 min, pur que la mousse obtenue soit constituée de façon prédominante de polyimide-amide.

13. Un procédé selon la revendication 10, dans lequel le précurseur sec de mousse est chauffé à une température dans la gamme de 210° à 250°C, de préférence pendant 30 à 45 min, pour que le mousse obtenue soit constituée de polyimide et de polyimide-amine.